# EUROPEAN PATENT APPLICATION

(11) **EP 4 184 459 A1**
(43) Date of publication of application: **24.05.2023**
(21) Application number: 22206840.5
(22) Date of filing: 11.11.2022
(51) Int. Cl.: G07C 5/00, G06Q 10/20

(54) **MAINTENANCE SYSTEM**

(30) Priority: 18.11.2021 US 202117530160
(71) Applicant: Transportation IP Holdings, LLC, Norwalk, CT 06851 (US)
(72) Inventor: Juhas, Michael Lee, Norwalk, 06851 (US)
(74) Representative: Laufhütte, Dieter

(57) **Abstract**

A maintenance controller 202 may be provided that includes one or more processors 208. The one or more processors may determine one or more operating conditions 304 related to a vehicle system, and receive an input 314 related to a first repair or a first maintenance based on the one or more operating conditions. The one or more processors may analyze the input 318 by performing a diagnostic analysis based on the one or more operating conditions, and determine a fault 322 related to the input based on the diagnostic analysis.

## Description

### BACKGROUND

### Technical Field.

The subject matter described herein relates to a maintenance systems for vehicles.

### Description of the Art.

Maintenance and repair of vehicle systems can be complex, time consuming, and inefficient. For example, in the rail vehicle industry, train yards are provided that can include numerous rail vehicle systems. While in the train yard and before leaving on a trip, the rail vehicle systems typically are refueled, cargo and or individual cars are exchanged, and any repair or maintenance needed must be performed. As a result, the scheduling of the maintenance and repair, along with these other activities must be provided in an efficient manner to prevent the rail vehicles from getting behind on delivery schedules, passenger pickup, etc.

In addition to efficiency, when maintenance and repair is occurring, it is of upmost importance that the repair and/or maintenance addresses all operating conditions that may need repair or maintenance, and that repairs and/or maintenance is not skipped, or missed. Allowing a rail vehicle that has not been appropriately repaired or maintained back into the field can be dangerous, harmful to the rail vehicle, and ultimately cause significant expense.

Currently, maintenance workers are dependent on receiving these operating conditions, or prescriptions (Rxs), from the vehicle system operators, owners, vehicle system controllers, etc. In particular, prescriptions are instructions on how to diagnose, or remedy the operating conditions that are not optimal. On occasion, the vehicle system operators, or owners may not report a potential operating condition because a vehicle system may already be behind schedule, or the operator/owner may desire to take a chance that the vehicle system can make it to a next maintenance location without additional issue. In addition, while some vehicle systems monitor operating system sensors continuously to continuously make determinations related to maintenance and repair concerns, other vehicle systems simply do not have the ability to make such continuous determinati ons.

In addition, once a vehicle system reaches is scheduled for repair or maintenance (e.g. is shopped), there is no way to ensure the repair and maintenance is being provided. On occasion, an operating condition is simply not repaired, checked as repaired when repair has not occurred, is insufficiently repaired, or the like. While at some maintenance locations standardized diagnostic tests may be run before the vehicle system leaves an area, such standardized diagnostic tests may be irrelevant to the operating condition that needed to be repaired or maintained. Consequently, vehicle systems can leave maintenance locations without remedying one or more operating conditions of the vehicle system.

### BRIEF DESCRIPTION

In accordance with one embodiment, a maintenance controller may be provided that includes one or more processors that may determine one or more operating conditions related to a vehicle system, and receive an input related to a first repair or a first maintenance based on the one or more operating conditions. The one or more processors may analyze the input by performing a diagnostic analysis based on the one or more operating conditions, and determine a fault related to the input based on the diagnostic analysis.

In accordance with one embodiment, a method may be provided that can include determining one or more operating conditions related to a vehicle system, and receiving an input related to a first repair or a first maintenance based on the one or more operating conditions. The method may also include analyzing the input by performing a diagnostic analysis based on the one or more operating conditions, and determining a fault related to the input based on the diagnostic analysis.

In accordance with one embodiment, a system may be provided that includes a maintenance controller having one or more processors. The one or more processors may determine one or more operating conditions related to a vehicle system, and communicate the one or more operating conditions to a remote device. The one or more processors may receive an input related to a first repair or a first maintenance based on the one or more operating conditions, and identify at least one diagnostic test based on the one or more operating conditions. The one or more processors may analyze the input by performing a diagnostic analysis utilizing the at least one diagnostic test identified, and determine a fault related to the input based on the diagnostic analysis.

### BRIEF DESCRIPTION OF THE DRAWINGS

The inventive subject matter may be understood from reading the following description of non-limiting embodiments, with reference to the attached drawings, wherein below:
Figure 1 is a schematic view of an environment of a vehicle system;
Figure 2 is a schematic view of a control system of a vehicle system; and
Figure 3 is a block flow diagram of a method of repairing and maintaining a vehicle system.

### DETAILED DESCRIPTION

One or more embodiments of the subject matter described herein relates to a system and method for repairing and maintaining a vehicle system. A maintenance controller may be provided that obtains operating conditions that may result in maintenance or repair for the vehicle system. The operating conditions may include a hot engine, a hot axle, a pressure reading, a determined milage, etc. Based on the operating conditions, diagnostic tests are obtained that may be utilized to determine the cause of the operating condition, and potential maintenance or repair required. The diagnostic tests may be obtained from a remote device, including a controller at a global performance optimization center (GPOC). After a maintenance person provides an input indicating that the repair or maintenance has occurred, the maintenance controller may perform a diagnostic analysis utilizing the diagnostic test to verify the repair or maintenance addressed the operating condition. If an operating condition remains, a determination of a fault of the input can be made, and the vehicle system is not released for use. Instead, additional repair and maintenance is provided to ensure the operating condition has been appropriately addressed.

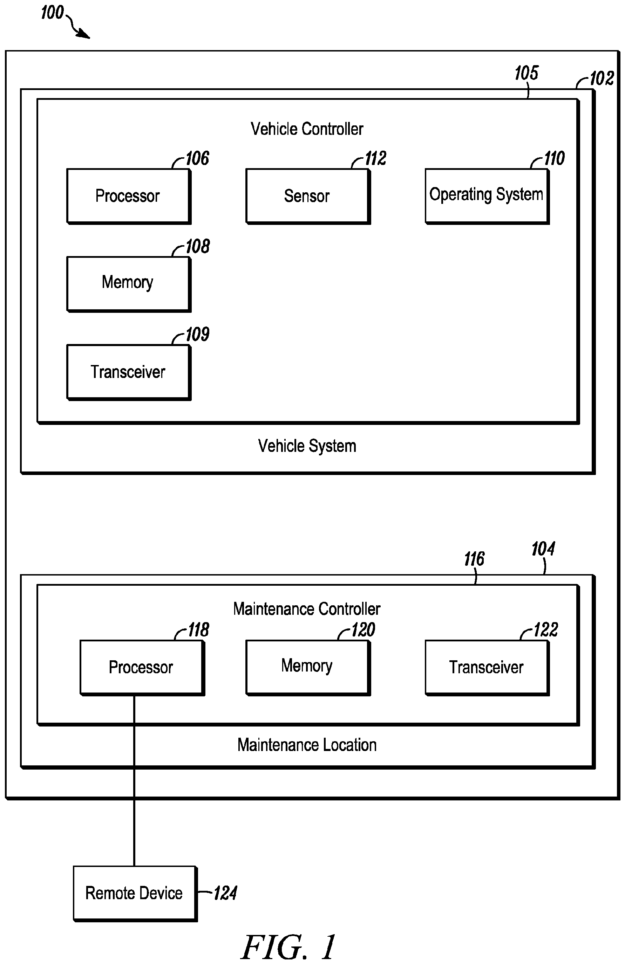

Figure 1 illustrates an example environment 100 in which one or more vehicle systems 102 are located that may require maintenance or repair at a maintenance location 104. The environment may include roadways, railways, waterways, runways, airways, or the like. The vehicle systems may be rail vehicles, automobiles, marine vessels, airplanes, off road vehicles, mining vehicles, tractors, transit vehicles, trolleys, combines, farming vehicles, construction vehicles, vehicles in a fleet, or the like. In example embodiments, the maintenance location may be a maintenance area of a train yard, a garage at an auto shop, a maintenance area in a hanger, a maintenance area in a harbor, or the like.

Each vehicle system may include a vehicle controller 105 with one or more processors 106, a memory 108, and a transceiver 109. Each vehicle system may also include one or more operating systems 110 upon which maintenance or repair may occur. The operating systems may include a propulsion system, braking system, bearing system, axles, wheels, engine, cooling system, heating system, navigation system, etc. Each operating system may include one or more sensors 112 that may obtain operational data related to each respective operating system. The operational data may include a temperature, pressure, speed, acceleration, angular velocity, fluid level, or the like. The operational data may be utilized by the one or more processors of the vehicle controller, an operator, a remote controller, etc. to determine an operating condition of an operating system. An operating condition may be any prescription (Rx), parameter, characteristic, or the like that an operating system may have that requires maintenance or repair. To this end, each operating condition may represent a condition where maintenance or repair could improve performance, safety, efficiency, or the like, of the operating system.

For example, an axle speed sensor may not be operating appropriately, including not providing a correct operating speed. The operating condition is the incorrect axle speed reading that indicates a sensor may need to be repaired, or replaced.

In another example, a coolant fluid pressure in the radiator may be detected as below a threshold fluid pressure. As a result, the operating condition of the coolant fluid pressure being below the threshold level indicates that coolant needs to be added to the radiator, a leak in the radiator may exist, a coolant pump is not operating as expected or desired, etc.

In yet another example, air pressure in a compressed air system may drop at a threshold rate that is consistent with a leak in a brake line. In this example, the operating condition is the drop in pressure at a rate that is faster than a threshold rate and could indicate that maintenance or repair of the compressed air system is required. Alternatively, the distance that a vehicle system has traveled (e.g., since a prior maintenance or repair) may exceed an operating milage threshold. The mileage can indicate that maintenance or inspection of the vehicle system (e.g., of the braking system of the vehicle system)is needed. In this example, the distance that the vehicle system has traveled can be the operating condition.

In yet another example, receiving a prescription (Rx) can be considered to be receiving, obtaining, or determining an operating condition. A prescription can be a recommended diagnostic test, or recommendation or suggestion to identify a repair or maintenance for the vehicle system. In one example, a prescription is a request, or indication, that a fluid level should be checked. The prescription may be communicated by, an input into a vehicle controller, maintenance controller, etc. by an operator, maintenance personnel, or the like. In another example, a suggested diagnostic test is a prescription, whether input by an individual or determined by a controller or device.

A maintenance controller 116 can include one or more processors 118, a memory 120, and a transceiver 122. The maintenance controller may be in communication with the vehicle controller and one or more remote devices 124. In one example, the remote device can be a supervisory controller for communications with the owners of the vehicle systems. In an example, the remote device is a controller at a GPOC. The GPOC is a center where numerous vehicle systems (e.g. 10,000+ or another number) can be monitored to ensure the health and safety of each of the vehicle systems. In this manner, the remote device may include numerous diagnostic tests that may be performed by one or more processors on a vehicle system depending on an operating condition determined, historical data related to a specific vehicle system, historical data related to other similar vehicle systems, or the like. In addition, there may also be individuals with expertise in maintenance and repair, consultants, etc., at the remote device, along with communication pathways to owners of vehicle systems. As a result, the remote device may be a resource utilized by the maintenance controller to provide maintenance and repair for each vehicle system at the maintenance location.

Similar to the vehicle controller, the maintenance controller may determine one or more operating conditions related to a vehicle system. The maintenance controller may determine the one or more operating conditions related to the vehicle system by receiving a communication from the vehicle system controller, a remote device, etc. that an operating condition is provided. In one example, a prescription is communicated by a vehicle controller, remote device, or the like. In another example, the vehicle system may determine one or more operating conditions by communicating with the vehicle system controller, one or more sensors of the operating systems, etc. to obtain operating system data. In one example, the operating system data may be obtained while a vehicle system is still on a route or on a trip. Alternatively the operating system data may be obtained at the maintenance location as a result of diagnostic tests, modeling, or the like. When utilizing and analyzing operating system data from a vehicle system that is still on a route, the one or more processors may utilize the operating system data to calculate, identify, etc. one or more operating conditions. In one example, the one or more processors may access and utilize a lookup table from the memory of the maintenance controller. In other examples an algorithm, artificial intelligence algorithm, mathematical function, mathematical model, decision tree, or the like may be utilized to determine the operating condition.

In one example, when a vehicle system approaches the maintenance location, the maintenance controller may communicate with the vehicle controller to obtain operating conditions determined by the vehicle controller, operator of the vehicle controller, or the like. In addition, the maintenance controller may also automatically communicate with the vehicle controller to provide operating system data. In one example, the operating system data may be related to the operating condition so that the operating system data may be used to facilitate maintenance and repair. Alternatively, the operating system data may not be related to the operating condition, and instead is operating data that may be analyzed by the one or more processors to determine any operating conditions the vehicle controller, operator of the vehicle controller, etc. may have missed or neglected to share with the maintenance controller.

In another example, the operating system data may be obtained after the vehicle system is at a maintenance location. The operating system data may repeatedly obtain the operating system data so that trends for analysis may be obtained. By repeatedly receiving the operating system data over a period, fluctuations in parameters such as temperature, pressures, fluid levels, etc. may be detected for analysis. In one example, the operating system data is obtained once every second. In another example, the operating system data may be obtained such that five operating system data points are received every minute. In yet another example, thirty operating system data points are received every minute. In this manner, enough operating system data may be obtained often enough that the trends in the operating system data can be utilized for diagnostic purposed, including identifying operating conditions. In one example, the operating system data is obtained in real-time so that a maintenance person, or other personal and make instant determinations related to diagnosis. As used herein real-time refers to a time frame contemporaneous with an occurrence such a sensor reading being obtained. For example, a real-time process or operation occurs immediately after (e.g. within second after) a sensor detects operational sensor data. Alternatively, the operating system data may be captured and communicated after a delay.

Once the operating system data is obtained, the maintenance controller may communicate the operating condition(s) and/or the operating system data to a remote device, including a remote device at a GPOC for analysis. In one example, based on the determined operating conditions, the maintenance controller may schedule maintenance and repair of the vehicle system to address the operating conditions.

The maintenance controller may obtain diagnostic tests related to each operating condition determined by the maintenance controller. Diagnostic tests may include pressure based tests, temperature based tests, board level reliability tests, failure mode analysis, load tests, or the like. For example, the diagnostic test could include replicating, or modeling a hot engine to determine what is causing the hot engine. In particular, the one or more processors may perform a diagnostic analysis based on the obtained, or identified diagnostic test(s). The diagnostic analysis is an analysis that cannot be performed by a human, or in a time-appropriate manner by a human. To this end, the diagnostic analysis may include modeling, complex calculations, including the use of numerical methods, failure analysis determinations, operating system data acquisition from sensors under determined conditions, or the like to improve diagnosis of the cause of the operating condition. By obtaining diagnostic test(s) related to the operating condition, and performing diagnostic analysis with the one or more processors to determine the cause of the operating condition, a more efficient maintenance and repair procedure is provided.

In one example, to obtain the diagnostic tests related to the operating condition, the maintenance controller may communicate with a remote device, including a remote device at a CPOC. In particular, when the operating conditions are determined, the maintenance controller either obtains the diagnostic tests from its memory, or communicates with a remote device to receive the diagnostic tests. By communicating with a remote device, such as a controller at a CPOC, additional diagnostic tests specific to the operating condition may be provided to the maintenance controller to facilitate trouble shooting, and decrease maintenance and repair time. To this end, individuals with greater expertise than an individual maintenance person may be able to communicate information, including diagnostic tests that assist in determining the cause of the operating condition. Consequently, the diagnostic tests are specific to and related to the operating condition to improve identification of the cause of the operating condition. The diagnostic test may then be utilized by the maintenance person to make determinations related to the maintenance and repair of the vehicle system.

In addition, after the maintenance person has provided an input into the maintenance controller that maintenance or repair has occurred, the maintenance controller can automatically run the diagnostic tests identified and selected to verify the repair or maintenance provided addressed the operating condition. Again, the one or more processors may perform the diagnostic analysis to verify that an operating condition is no longer presented. If the operating condition remains, a determination of a fault in the input is provided. A fault in an input occurs any time an operating condition is identified after an input is provided. A fault may be as a result of a diagnostic test that showing an operating condition remains, a new operating condition is presented, the input cannot be accurate, or the like. For example, if an operator indicates in an input that an oil fluid level was checked as was ok, and a diagnostic test shows an oil cap/dipstick was never removed, a fault is provided because the oil could not have been checked. Alternatively, a fluid level monitor may indicate the oil level is low. Consequently, the oil level is not ok, and a fault is presented. In one example, the vehicle system can be rescheduled for repair and maintenance to ensure the operating condition is eliminated and the vehicle system is safe for use. Thus, by dynamically altering the diagnostic tests to run on a vehicle system to be tailored to the operating condition, the vehicle system is unlikely to leave the maintenance location until successful maintenance and repair has occurred.

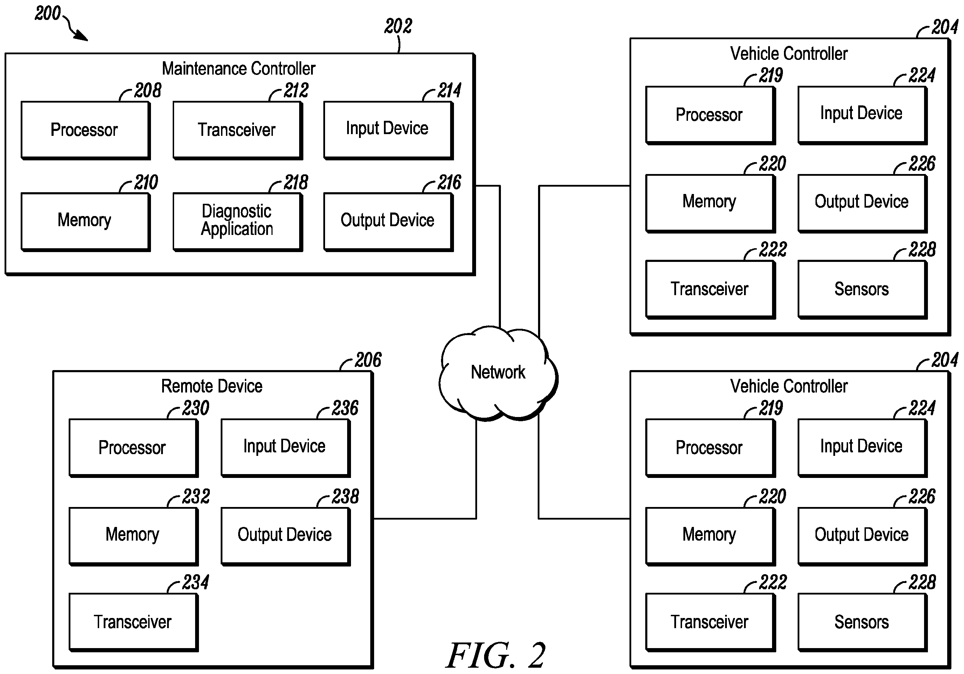

Figure 2 provides a schematic illustration of a control system 200 that may improve maintenance and repair for a vehicle system. The vehicle systems can include automobiles, rail vehicles, marine vessels, airplanes, off road vehicles, construction vehicles, vehicles in a fleet, or the like. The control system includes a maintenance controller 202 that may be in communication with plural vehicle controllers 204, and one or more remote devices 206. In one example, the one or more remote devices may include a controller at a GPOC. The maintenance controller, vehicle controllers, and remote device may communicate with one another over a network 207. The network in examples may be a Wi-Fi network, cellular network, local area network (LAN), wide area network (WAN), or the like.

The maintenance controller includes one or more processors 208 (e.g., microprocessors, integrated circuits, field programmable gate arrays, etc.). The maintenance controller may be located remotely from the vehicle systems, at a maintenance location, dispatch, station, static location, etc. A maintenance location may be any location where maintenance and repair of a vehicle system may occur. As an example, for automobiles, a maintenance location may be an auto shop. In another example, for rail vehicles, the maintenance location may be at a maintenance area of a train yard. In one example, the environment that includes the maintenance location is the environment illustrated in Figure 1. The one or more processors may obtain both operating conditions, and operating system data from operation systems, from the vehicle controllers, sensors of the vehicle system, etc. Based on the operating conditions communicated and/or operating system data the one or more processors may determine operating conditions related to vehicle system.

The maintenance controller may also include a memory 210. The memory may be an electronic computer-readable storage device or medium. The maintenance controller memory may be within the housing of the maintenance controller, or alternatively may be on a separate device that may be communicatively coupled to the controller and the one or more processors therein. By "communicatively coupled," it is meant that two devices, systems, subsystems, assemblies, modules, components, and the like, are joined by one or more wired or wireless communication links, such as by one or more conductive (e.g., copper) wires, cables, or buses; wireless networks; fiber optic cables, and the like. The controller memory can include a tangible, non-transitory computer-readable storage medium that stores data on a temporary or permanent basis for use by the one or more processors. The memory may include one or more volatile and/or non-volatile memory devices, such as random access memory (RAM), static random access memory (SRAM), dynamic RAM (DRAM), another type of RAM, read only memory (ROM), flash memory, magnetic storage devices (e.g., hard discs, floppy discs, or magnetic tapes), optical discs, and the like. The memory may be utilized to store information related to historical data, vehicle system data, diagnostic tests, executable instructions, etc. In one example, the memory may be used by the one or more processors to access diagnostic tests that can be related to an operating condition. In addition, algorithms, applications, models, or the like may also be stored within the memory to be used by the one or more processors in making determinations related to the operating condition of a vehicle system.

The maintenance controller may also include a transceiver 212 may communicate with plural vehicle controllers and one or more remote devices. The transceiver may be a single unit or be a separate receiver and transmitter. In one example, the transceiver may only transmit signals, but alternatively may send (e.g., transmit and/or broadcast) and receive signals.

The maintenance controller may also include an input device 214 and an output device 216. The input device may be an interface between an operator, or monitor, and the one or more processors. The input device may include a display or touch screen, input buttons, ports for receiving memory devices, etc. In this manner, an operator or monitor may manually provide information into the maintenance controller. In one example, the information may include inputs. Inputs may include diagnostic tests a maintenance person, time, and date a vehicle system enters a maintenance location, results of diagnostic tests, maintenance or repair performed, notes related to the maintenance or repair, indication that the vehicle system has been repaired or is ready for use, or the like. In particular, a vehicle system may not be released for use until an input is provided that work has been done to provide maintenance or repair to address all operating conditions determined by the maintenance controller. Similarly, the output device may present information and data to an operator, or provide prompts for information and data to receive the inputs from the operator. The output device may similarly be a display or touch screen. In this manner, a display or touch screen may be an input device and an output device.

The maintenance controller can additionally include a diagnostic application 218 for determining the health of vehicle systems that communicate with the one or more processors of the maintenance controller. The diagnostic application may obtain operating system data, determine operating conditions, schedule times for repair and/or maintenance, identify diagnostic tests for determining a cause of an operating condition, perform diagnostic analysis including modeling of operating systems, calculations, derivations, etc., verify an input that a repair or maintenance was performed, or successful via diagnostic analysis, or the like. The diagnostic application may be a program, instructions, or the like, that may be utilized by the one or more processors to perform the operations to improve maintenance or repair of a vehicle system. Optionally, the diagnostic application can represent hardware circuity that includes and/or is connected with one or more processors for performing the operations described in connection with the diagnostic application.

Each vehicle controller can include one or more processors 219 (microprocessors, integrated circuits, field programmable gate arrays, etc.), a memory 220, which may be an electronic, computer-readable storage device or medium, a transceiver 222 may communicate with the maintenance controller, an input device 224 and an output device 226. The input device may be an interface between an operator, or monitor, and the one or more processors. The input device may include a display or touch screen, input buttons, ports for receiving memory devices, etc. In this manner, an operator or monitor gauges, operations, monitors, etc. of the vehicle system and input operating conditions into the vehicle controller.

The vehicle controller may also include one or more sensors 228 disposed within and adjacent each operating system to detect movement data, area data, vehicle data, route data, etc. The one or more sensors may be pressure sensors, temperature sensors, speed sensors, voltmeters, angular speed sensors, etc. and may measure fluid levels, wheel speed, axle temperature, fluid temperature, engine performance, braking performance and wear, etc. The one or more sensors monitor different operating systems of the vehicle system to obtain vehicle system data that may be utilized by the diagnosis application, one or more processors of the maintenance controller, one or more processors of the remote device, or one or more processors of the vehicle controller to analyze and make determinations related to at least one operating condition. In particular, the vehicle controller may communicate with the maintenance controller to provide data, including vehicle system data to the maintenance controller so the maintenance controller can make determinations related to the operating condition, identify diagnostic tests to perform, and perform diagnostic analysis accordingly.

The remote device can include one or more processors 230 (microprocessors, integrated circuits, field programmable gate arrays, etc.), a memory 232, which may be an electronic, computer-readable storage device or medium, a transceiver 234 may communicate with the maintenance controller, an input device 236 and an output device 238. The input device may be an interface between an operator, or monitor, and the one or more processors. The input device may include a display or touch screen, input buttons, ports for receiving memory devices, etc.

In one example, the remote device is a controller at a GPOC. The remote device may receive communication from the maintenance controller that includes operating conditions, operating system data, information and data related to the vehicle system including the manufacturer of operating systems therein, or the like. The maintenance controller may communicate any and all data and information that may assist in the remote device, or an individual at the remote device location in either diagnosing a cause for the operating condition, or providing diagnostic tests that may be performed to diagnose the cause for the operating condition. The remote device may communicate data and information to the maintenance controller including, the diagnostic tests identified or determined, historical data related to a vehicle system, historical data of another vehicle system that may be similarly situated to the vehicle system as a result of environmental conditions, manufacturer of an operating system, age of the vehicle system, milage of the vehicle system, etc. Based on the data and information communicated, the maintenance controller may determine the operating condition along with identifying the diagnostic tests to perform to determine the cause of the operating condition(s).

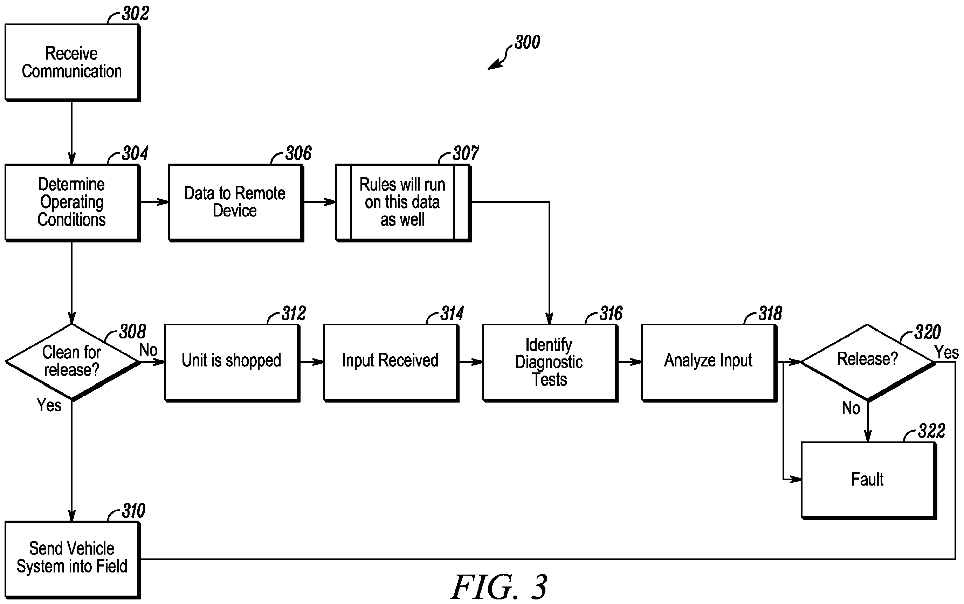

Figure 3 illustrates a method for providing maintenance and repair for a vehicle system. The vehicle system may be any of the vehicle systems previously described. In one example, a control system may be utilized to implement the method of Figure 3. In an example, the control system is the control system of Figure 2.

At step 302, a communication is received that a vehicle system is in an environment with a maintenance location. In one example, the vehicle system is a rail vehicle that enters a train yard within a maintenance area. In another example, the communication comes to a maintenance controller from the vehicle controller of the vehicle system. In yet another example, the maintenance controller automatically detects the vehicle system is within the environment and begins communicating with the vehicle controller that automatically responds accordingly. In another example, the vehicle system is determined to be in the environment and an operator of the maintenance controller communicates to an operator of the vehicle system, who responds to the communication.

At step 304, one or more operating conditions related to the vehicle system are determined by one or more processors of the maintenance controller. In one example, the operator of the vehicle system communicates the operating condition to the operator of the maintenance controller, and the operator of the maintenance controller manually inputs the operating condition into the maintenance controller. In another example, the vehicle controller includes one or more operating conditions in a memory. In one such example, the one or more operating conditions are in a log, and more particularly an operating conditions log. The operating conditions may be in the memory as a result of an operator inputting the operating condition into the vehicle controller, the vehicle controller receiving the operating condition from a remote device, one or more processors utilizing operating system data of operating systems of the vehicle system including operating system data obtained from sensors, or the like. Alternatively, the operating condition may be determined by obtaining the operating condition from the sensors, or memory of the maintenance controller, or from the sensors when the vehicle system is at the maintenance location. In particular, the operating condition may be communicated by the vehicle controller or a remote device prior to the vehicle system entering the environment.

In yet another example, the one or more processors of the maintenance controller may determine operating condition(s) of the vehicle system by obtaining operating system data of the vehicle system. The operating system data may be obtained from a remote device, the vehicle controller, directly from a sensor of an operating system of vehicle system or the like. In one example, the operating system data may be automatically obtained when the vehicle system is within the environment such that the maintenance controller can analyze the operating system data to determine any operating condition(s) that should be addressed while the vehicle system is in the environment. Alternatively, the operating system data is obtained in response to determining the operating condition(s) to be utilized in making determinations regarding what is causing the operating condition(s), and how to repair the operating system with the operating condition accordingly.

Once the one or more processors of the maintenance controller have the operating system data, the processors may utilize an algorithm, artificial intelligence algorithm, mathematical function, mathematical model, computer generated model, lookup table, decision tree, or the like to determine the operating condition(s) from the operating system data. In one example, historic data may also be utilized in making the determination. The historical data may be obtained from the memory of the vehicle controller, a remote device, or the memory of the maintenance controller. While in one example the maintenance controller utilizes the algorithm, artificial intelligence algorithm, mathematical function, mathematical model, computer generated model, lookup table, decision tree, or the like to determine the operating condition(s) from the operating system data may be determined by the remote controller, vehicle controller, or the like. In addition, any controller may identify an operating condition, including a fault, based on the determinations that may be utilized to make additional determinations to obtain additional operating conditions.

At step 306, optionally, the operating condition(s) is communicated to a remote device. In addition, the operating system data may also be communicated to the remote device at the same time. In one example the remote device is at a GPOC. The GPOC may have resources, including a memory of the remote device, experts in the field, or the like that may be utilized to improve maintenance and repair of the vehicle system at the maintenance location. In particular, at the GPOC, historical data from other vehicle systems similarly situated to a vehicle system with operating condition may be available. For example, if the vehicle system is a rail vehicle system that operates utilizing a hybrid engine and is traveling through rain and is experiencing an operating condition of the hybrid engine being too hot, the historical data may be of all other rail vehicles utilizing a hybrid engine and traveling through rain. By utilizing the historical data to see what was causing the operating condition previously, a set of diagnostic tests may be determined for checking the current rail vehicle system.

At step 307, optionally, diagnostic tests are determined and identified by the remote device based on the operating condition and/or operating system data. In particular, based on the operating condition and/or operating system data and analysis, a determination may be made related to one or more diagnostic tests that may be utilized to determine the cause of the operating condition. For example, if an engine is overheating, diagnostic tests may include determining a fluid level in the radiator, determining if a leak is in the radiator, determining if an engine component is malfunctioning, etc. Each diagnostic test can be determined based of the specific problem, or operating condition obtained. To this end, an expert may also analyze the operating system data to additionally input diagnostic tests.

The diagnostic tests may include modeling of an operating system, taking measurements and making calculations that can be performed by one or more processors of a maintenance controller, but not by a human. As a result, the diagnostic tests not only provide a manner for a maintenance person to attempt to determine the cause of the operating condition (utilizing the maintenance controller), but in addition, the maintenance controller can also verify if an operating condition has been addressed when inputs are provided by a maintenance person that the operating condition has been addressed.

At step 308, a determination is made whether the vehicle system may be released from the environment. If from the communications with the vehicle controller and analysis of operating system data, no operating conditions are determined for a vehicle system, then at step 310, the vehicle system is released to continue to a next destination. However, if an operating condition is determined to be presented, then at step 312, a first time for the vehicle system to undergo a first repair or a first maintenance is scheduled based on at least one of the operating condition or the operating system data.

At step 314, an input is received based on the first repair, or first maintenance. In particular, at the first time, a maintenance worker may attempt to determine the causes or reasons for the operating condition. In one example, the operating condition(s) are accompanied with prescriptions, or suggested diagnostic tests that may be utilized to determine the cause of the operating condition(s). To this end, the one or more processors may perform diagnostic analysis at this time to determine the reason for the operating condition. Based on the prescriptions, diagnostic tests, the expertise of the maintenance person, etc., the maintenance person performs the repair or maintenance needed to address the operating condition. After such maintenance or repair, the maintenance person enters inputs that are received by the one or more processors. The inputs may include the prescriptions, diagnostic tests, observations, etc. utilized to diagnose the cause of the operating condition, information related to the vehicle system, the amount of time required, the repair or maintenance required, the parts replaced and repaired, or the like. In this manner, documentation is provided related to the repair and maintenance that may be utilized when performing repairs or maintenance of the vehicle system, or other vehicle systems in the future.

At step 316, the one or more processors of the maintenance controller identify one or more diagnostic tests based on the operating condition(s) or operating system data. In one example, the one or more diagnostic tests are received from a communication from a remote device, including a remote device at a GPOC. The diagnostic tests may be utilized to verify that the repair, maintenance, and inputs provided were performed and successful. For example, in some cases, despite believing an operating system has been properly repaired or maintained, the incorrect reason for an operating condition is diagnosed, resulting in the operating condition remaining. In other examples, a maintenance person may be busy, neglectful, etc. and provide an incorrect input. The incorrect inputs may include indicating repair, maintenance, diagnostic test, etc. has occurred when the repair, maintenance, diagnostic test, etc. has not occurred. The incorrect input may result in the incorrect vehicle being listed on a screen when the input is provided. Regardless of the reason, by identifying the diagnostic tests, a verification step can be added before a vehicle system can leave the maintenance location.

At step 318, the input provided is analyzed by the one or more processors performing a diagnostic analysis based on the one or more operating conditions or operating system data. In one example, the diagnostic analysis is based on one or more of the diagnostic tests identified in the previous step. The diagnostic analysis may include modeling of components or parts of an operating system that was repaired or maintained, utilization of complex mathematical calculations, or the like. In one example, diagnostic analysis may include use of data or information that is part of the input. In one example, the operating condition was that a water cooling system had a low pressure level, and the input provided was that fluid was added and a diagnostic test was provided for leaks with no leaks detected. So, the diagnostic analysis may include a check of the current pressure level of the cooling system, along with a determination of properties of the cooling system based on the new pressure level input by the maintenance person. In addition, diagnostic analysis on the radiator can additional be performed to detect leaks. Consequently, if the radiator was not filled with fluid, or a leak was present, but not detected, or the like has occurred, the diagnostic analysis may be utilized to make the determination accordingly.

At step 320, a determination is made whether the vehicle system may be released from the maintenance area based on the input analyzed utilizing the diagnostic analysis. If based on the diagnostic analysis, the operating condition is no longer presented, and the input is verified, the vehicle system may be released for travel. However, if the vehicle system still has the operating condition, an indication the repair or maintenance was not successful, or a diagnostic analysis is not matching with information provided in the input, etc., then at step 322 the input is determined to have a fault. At this time, second maintenance or second repair may be scheduled for a second time. In one example, a communication is also provided to a remote device, such as a remote device at a GPOC that includes the operating system data obtained as a result of the diagnostic analysis. In this manner, an individual at the remote device may make determinations or additional recommendations regarding diagnostic tests to perform at the second time, or that may be utilized by the one or more processors when verifying a second input provided at the second time. To this end, the system may continuously analyze inputs and verify an operating condition has been appropriately repaired or maintained, before a vehicle system can be released for travel. Consequently, improved maintenance and repair is achieved.

In one or more example embodiments, a maintenance controller may be provided that includes one or more processors. The one or more processors may determine one or more operating conditions related to a vehicle system, and receive an input related to a first repair or a first maintenance based on the one or more operating conditions. The one or more processors may also analyze the input by performing a diagnostic analysis based on the one or more operating conditions, and determine a fault related to the input based on the diagnostic analysis.

Optionally, performing the diagnostic analysis may include obtaining operating system data from the vehicle system related to the one or more operating conditions. In one aspect, the one or more processors may also obtain at least five operating system data points related to the operating system data in a minute. In another aspect, the operating system data may be obtained in real-time. In one example, performing the diagnostic analysis may include identifying at least one diagnostic test based on the operating system data.In one embodiment, the at least one diagnostic test may be received from a remote device. Alternatively, the at least one diagnostic test may be based on historical data. In an example, the at least one diagnostic test may be one of a temperature based test, or a pressure based test.

Optionally, to determine the one or more operating conditions, the one or more processors may also determine the one or more operating conditions based on the operating system data. In one aspect, the one or more processors may further receive the operating system data from an operating system sensor of the vehicle system. In another aspect, the one or more processors may also communicate the one or more operating conditions to a remote device. In one example, to determine the one or more operating conditions may include obtaining the one or more operating conditions from the remote device based on operating system data. In another example, the vehicle system may be a rail vehicle.

In one or more example embodiments, a method may be provided that can include determining one or more operating conditions related to a vehicle system, and receiving an input related to a first repair or a first maintenance based on the one or more operating conditions. The method may also include analyzing the input by performing a diagnostic analysis based on the one or more operating conditions, and determining a fault related to the input based on the diagnostic analysis.

Optionally, performing the diagnostic analysis may include obtaining operating system data from the vehicle system related to the one or more operating conditions. In one aspect, the method may also include obtaining at least five operating system data points related to the operating system data in a minute. In one example, performing the diagnostic analysis may include identifying at least one diagnostic test based on the operating system data. In another example, the method may also include receiving the operating system data from an operating system sensor of the vehicle system. In one embodiment, performing the diagnostic analysis may include identifying at least one diagnostic test based on the operating conditions. In another embodiment, the method may also include communicating the one or more operating conditions to a remote device.

In one or more example embodiments a system may be provided that includes a maintenance controller having one or more processors. The one or more processors may determine one or more operating conditions related to a vehicle system, and communicate the one or more operating conditions to a remote device. The one or more processors may receive an input related to a first repair or a first maintenance based on the one or more operating conditions, and identify at least one diagnostic test based on the one or more operating conditions. The one or more processors may analyze the input by performing a diagnostic analysis utilizing the at least one diagnostic test identified, and determine a fault related to the input based on the diagnostic analysis. Optionally, the one or more processors may receive the at least one diagnostic test identified from the remote device.

In some example embodiments, the device performs one or more processes described herein. In some example embodiments, the device performs these processes based on processor executing software instructions stored by a computer-readable medium, such as a memory and/or a storage component. A computer-readable medium (e.g., a non-transitory computer-readable medium) is defined herein as a non-transitory memory device. A memory device includes memory space located inside of a single physical storage device or memory space spread across multiple physical storage devices.

Software instructions may be read into a memory and/or a storage component from another computer-readable medium or from another device via the communication interface. When executed, software instructions stored in a memory and/or a storage component cause the processor to perform one or more processes described herein. Additionally or alternatively, hardwired circuitry may be used in place of or in combination with software instructions to perform one or more processes described herein. Thus, embodiments described herein are not limited to any specific combination of hardware circuitry and software.

In one embodiment, the maintenance system may have a local data collection system deployed that may use machine learning to enable derivation-based learning outcomes. The maintenance system may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one embodiment, the maintenance system may include a policy engine that may apply one or more policies. These policies may be based at least in part on characteristics of a given item of equipment or environment. With respect to control policies, a neural network can receive input of a number of environmental and task-related parameters. These parameters may include an identification of a determined trip plan for a vehicle group, data from various sensors, and location and/or position data. The neural network can be trained to generate an output based on these inputs, with the output representing an action or sequence of actions that the vehicle group should take to accomplish the trip plan. During operation of one embodiment, a determination can occur by processing the inputs through the parameters of the neural network to generate a value at the output node designating that action as the desired action. This action may translate into a signal that causes the vehicle to operate. This may be accomplished via backpropagation, feed forward processes, closed loop feedback, or open loop feedback. Alternatively, rather than using backpropagation, the machine learning system of the controller may use evolution strategies techniques to tune various parameters of the artificial neural network. The maintenance system may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models is obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

As used herein, the terms "processor" and "computer," and related terms, e.g., "processing device," "computing device," and "controller" may be not limited to just those integrated circuits referred to in the art as a computer, but refer to a microcontroller, a microcomputer, a programmable logic controller (PLC), field programmable gate array, and application specific integrated circuit, and other programmable circuits. Suitable memory may include, for example, a computer-readable medium. A computer-readable medium may be, for example, a random-access memory (RAM), a computer-readable non-volatile medium, such as a flash memory. The term "non-transitory computer-readable media" represents a tangible computer-based device implemented for short-term and long-term storage of information, such as, computer-readable instructions, data structures, program modules and sub-modules, or other data in any device. Therefore, the methods described herein may be encoded as executable instructions embodied in a tangible, non-transitory, computer-readable medium, including, without limitation, a storage device and/or a memory device. Such instructions, when executed by a processor, cause the processor to perform at least a portion of the methods described herein. As such, the term includes tangible, computer-readable media, including, without limitation, non-transitory computer storage devices, including without limitation, volatile and non-volatile media, and removable and non-removable media such as firmware, physical and virtual storage, CD-ROMS, DVDs, and other digital sources, such as a network or the Internet.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and claims, range limitations may be combined and/or interchanged, such ranges may be identified and include all the sub-ranges contained therein unless context or language indicates otherwise.

This written description uses examples to disclose the embodiments, including the best mode, and to enable a person of ordinary skill in the art to practice the embodiments, including making and using any devices or systems and performing any incorporated methods. The claims define the patentable scope of the disclosure, and include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

## Claims

1. A system 200 comprising:
a maintenance controller 202 having one or more processors 208 configured to:
determine one or more operating conditions 304 related to a vehicle system 102;
receive an input 314 related to a first repair or a first maintenance based on the one or more operating conditions;
perform a diagnostic analysis 318 of the input based on the one or more operating conditions; and
determine a fault 322 related to the input based on the diagnostic analysis.

2. The system of claim 1, wherein the one or more processors are configured to perform the diagnostic analysis by obtaining operating system data from the vehicle system related to the one or more operating conditions.

3. The system of claim 2, wherein the one or more processors are further configured to obtain at least five operating system data points related to the operating system data in no more than a minute.

4. The system of claim 2, wherein the operating system data is obtained in real-time.

5. The system of claim 2, wherein the diagnostic analysis includes identifying at least one diagnostic test 307 based on the operating system data.

6. The system of claim 2, wherein to determine the one or more operating conditions, the one or more processors are further configured to determine the one or more operating conditions based on the operating system data.

7. The system of claim 2, wherein the one or more processors are further configured to receive the operating system data from an operating system sensor 112 of the vehicle system.

8. A method comprising:
determining one or more operating conditions 304 related to a vehicle system 102;
receiving an input 314 related to a first repair or a first maintenance based on the one or more operating conditions;
performing a diagnostic analysis 318 of the input based on the one or more operating conditions; and
determining a fault 322 related to the input based on the diagnostic analysis.

9. The method of claim 8, wherein performing the diagnostic analysis includes obtaining operating system data from the vehicle system related to the one or more operating conditions.

10. The method of claim 9, further comprising: obtaining at least five operating system data points related to the operating system data in a no more than a minute.

11. The method of claim 9, wherein performing the diagnostic analysis includes identifying at least one diagnostic test based on the operating system data.

12. The method of claim 9, further comprising receiving the operating system data from an operating system sensor of the vehicle system.

13. The method of claim 8, wherein performing the diagnostic analysis includes identifying at least one diagnostic test 307 based on the operating conditions.

14. The method of claim 8, further comprising communicating the one or more operating conditions 306 to a remote device 124.

15. A system comprising:
a maintenance controller 202 having one or more processors 208 configured to:
determine one or more operating conditions 304 related to a vehicle system 102;
communicate the one or more operating conditions 306 to a remote device 124;
receive an input 314 related to a first repair or a first maintenance based on the one or more operating conditions;
identify at least one diagnostic test 307 based on the one or more operating conditions;
performing a diagnostic analysis 318 of the input utilizing the at least one diagnostic test that is identified; and
determine a fault 322 related to the input based on the diagnostic analysis.
